(19) **Europäisches Patentamt**

**European Patent Office**

**Office européen des brevets**

(11) **EP 1 485 327 B1**

(12) **EUROPÄISCHE PATENTSCHRIFT**

(45) Veröffentlichungstag und Bekanntmachung des Hinweises auf die Patenterteilung:
**29.11.2006  Patentblatt 2006/48**

(21) Anmeldenummer: **02719717.7**

(22) Anmeldetag: **23.01.2002**

(51) Int Cl.:
**C03B 23/047** (2006.01)     **C03B 37/012** (2006.01)

(86) Internationale Anmeldenummer:
**PCT/EP2002/000664**

(87) Internationale Veröffentlichungsnummer:
**WO 2003/022757 (20.03.2003 Gazette 2003/12)**

(54) **VERFAHREN UND VORRICHTUNG ZUR HERSTELLUNG EINES ZYLINDERFÖRMIGEN GLASKÖRPERS**

METHOD AND DEVICE FOR PRODUCING A CYLINDRICAL GLASS BODY

PROCEDE ET DISPOSITIF DE FABRICATION D'UN OBJET CYLINDRIQUE EN VERRE

(84) Benannte Vertragsstaaten:
**DE FR GB IT**

(43) Veröffentlichungstag der Anmeldung:
**15.12.2004  Patentblatt 2004/51**

(73) Patentinhaber: **Heraeus Tenevo GmbH**
**63450 Hanau (DE)**

(72) Erfinder:
• **BOGDAHN, Thomas**
**63791 Karlstein (DE)**
• **GANZ, Oliver**
**63486 Bruchköbel (DE)**

(74) Vertreter: **Staudt, Armin Walter et al**
**Patentanwalt**
**Auf der Mauer 8**
**63674 Altenstadt (DE)**

(56) Entgegenhaltungen:
**EP-A- 0 846 665          EP-A- 1 092 685**
**DE-A- 19 536 960          FR-A- 2 767 810**
**US-A- 3 652 248**

**Beschreibung**

Die vorliegende Erfindung betrifft ein Verfahren zur Herstellung eines zylinderförmigen Glaskörpers, insbesondere eines Quarzglaskörpers, in einem Vertikalziehprozess, umfassend einen Verfahrensschritt, in welchem ein Glasrohling einer Heizzone zugeführt, darin bereichsweise erweicht und aus dem erweichten Bereich ein Glasstrang mit geregelter Ziehgeschwindigkeit mittels eines Abzugs abgezogen wird, der eine erste Abzugseinheit mit am Glasstrang abrollenden und um dessen Umfang verteilten Rollkörpern, die von einem Referenz-Rollkörper und mindestens einem Hilfs-Rollkörper gebildet werden, aufweist, wobei die Ziehgeschwindigkeit über die Drehzahl des Referenz-Rollkörpers geregelt wird.

Weiterhin betrifft die Erfindung eine Vorrichtung zur Herstellung eines zylinderförmigen Glaskörpers, insbesondere eines Quarzglaskörpers, in einem Vertikalziehprozess, mit einem ringförmigen Heizelement zum Erhitzen und Erweichen eines Glasrohlings, mit einem Abzug, der einen Rahmen aufweist, an dem eine erste Abzugseinheit mit am Glasstrang abrollenden und um dessen Umfang verteilten Rollkörpern, die von einem Referenz-Rollkörper und mindestens einem Hilfs-Rollkörper gebildet werden, gehalten wird, wobei der Referenz-Rollkörper mit einer Drehzahlregelung zur Einstellung der Ziehgeschwindigkeit verbunden ist.

Derartige Verfahren und Vorrichtungen dienen der Herstellung von zylinderförmigen Bauteilen, insbesondere von Rohren und Stäben aus Quarzglas, oder Vorformen für optische Fasern. In der DE-A-195 36 960 sind ein Verfahren und eine Vorrichtung dieser Gattung beschrieben. Zur Herstellung eines Quarzglasrohres in einem Vertikalziehprozess wird ein Quarzglas-Hohlzylinder mit dem unteren Ende beginnend einem Ringofen zugeführt, darin erhitzt und zonenweise erweicht. Aus dem erweichten Bereich wird unter Ausbildung einer Ziehzwiebel kontinuierlich ein Quarzglasrohrstrang nach unten abgezogen. Hierfür ist in einer vertikal festen Position ein Abzug vorgesehen, der zwei Rollen aufweist, die sich am abgezogenen Rohrstrang gegenüberliegend gegensinnig daran abrollen. Der Außendurchmesser und die Wandstärke des Rohrstrangs werden auf einen vorgegebenen Sollwert geregelt. Stellgröße für diese Regelung sind Ziehgeschwindigkeit und Blasdruck, wobei die Ziehgeschwindigkeit durch Drehzahlregelung der Rollen eingestellt wird. Vom abgezogenen Rohrstrang werden von Zeit zu Zeit Rohrstücke mit der gewünschte Länge abgetrennt.

Da das Quarzglas im Bereich des Abzugs noch nicht vollständig abgekühlt ist, können die Rollen Abdrücke erzeugen. Besonders bei Biegungen des Glasstrangs können hohe Kräfte auf den Glasstrang einwirken, die durch Hebelwirkung im Bereich der Ziehzwiebel eine weitere Verformung des Strangs erzeugen können. Darüber hinaus kommt es durch ungleichmäßigen Abrieb der sich gegenüberliegenden Rollen zu Gangunterschieden, die zu Schleifspuren und anderen Oberflächenverletzungen führen. Auch plötzliche Gewichtsänderungen des Glasstrangs beim Ablängen können zu Verletzungen der Oberfläche im

Bereich des Abzugs beitragen.

Der Erfindung liegt die Aufgabe zugrunde, ein Verfahren anzugeben, das Oberflächenbeschädigungen des Glasstrangs durch den Abzug verringert und bei dem Verformungen infolge vorhandener Biegungen des Glasstrangs vermieden werden. Weiterhin liegt der Erfindung die Aufgabe zugrunde, eine Vorrichtung bereitzustellen, die es ermöglicht, in einem Vertikalziehprozess zylinderförmige Quarzglaskörper weitgehend ohne Oberflächenbeschädigungen herzustellen.

Diese Aufgabe wird hinsichtlich des Verfahrens ausgehend von dem Verfahren der eingangs genannten Gattung erfindungsgemäß dadurch gelöst, dass in Abhängigkeit vom Gewicht des abgezogenen Glasstrangs ein Wert für das Drehmoment des Referenz-Rollkörpers ermittelt wird, und dass der ermittelte Wert als Soll-Drehmoment für die Einstellung des Drehmoments bei dem mindestens einen Hilfs-Rollkörper herangezogen wird.

Bei den Rollkörpern handelt es sich im einfachsten Fall um Rollen (Walzen) mit einer Abrollfläche in Zylindermantelform. Mehrere Rollkörper sind um den Glasstrang so verteilt, dass sich die von den Rollkörpern radial auf den Glasstrang aufgebrachten Anpresskräfte gegenseitig kompensieren. Die Rollkörper einer ersten Abzugseinheit liegen im einfachsten Fall - aber nicht notwendigerweise - in einer gemeinsamen horizontalen Ebene am Glasstrang an.

Bei mindestens einem der Rollkörper wird die Drehzahl und damit die Ziehgeschwindigkeit des Abzugs geregelt. In den folgenden Erläuterungen wird dieser Rollkörper der ersten Abzugseinheit als "Referenz-Rollkörper" oder auch als "Referenzrolle" bezeichnet. Aufgrund des Durchmesser der Referenzrolle und ihrem Reibungskoeffizient im Kontakt mit dem Glasstrang stellt sich bei der eingestellten Drehzahl und in Abhängigkeit vom Gewicht des abgezogenen Glasstrangs ein bestimmtes Drehmoment für die Referenzrolle ein.

Das Drehmoment "D" eines drehbar gelagerten Körpers ist definiert als das Produkt von Kraft "K" und Hebelarm "l".

$$D = K \times l$$

Die Kraft "K" ergibt sich beim vorliegenden Vertikalziehprozess aus dem Gewicht des abgezogenen Glasstrangs in Verbindung mit der Haftreibung des Rollkörpers im Kontakt mit dem Glasstrang. Die Haftreibung wird durch die Umfangsgeschwindigkeit des am Glasstrang abrollenden Rollkörpers beeinflusst.

Beim erfindungsgemäßen Verfahren wird das Drehmoment der Referenzrolle oder ein mit diesem Drehmoment korrelierbarer Wert ermittelt und der ermittelte Wert wird als "Soll-Drehmoment" als Vorgabe für die Einstellung des Drehmoments der übrigen Rollkörper der ersten Abzugseinheit herangezogen. Deren Drehmomente werden somit anhand des vorgegebenen Soll-Drehmoments koordiniert. Die Drehmomente des Hilfs-Rollkörpers beziehungsweise der Hilfs-Rollkörper können sich aufgrund einer Vielzahl von Gründen von dem Drehmoment des Referenz-Rollkörpers unterscheiden. Als Beispiele seien unterschiedliche Drehzahlen und Außendurchmesser oder Unrundheiten der Rollkörper genannt. Eine Ursache für unterschiedliche Außendurchmesser und Unrundheiten kann Abrieb sein.

Der Wert des Drehmoments der Referenzrolle lässt sich sowohl durch Messen als auch rechnerisch ermitteln. Im einfachsten Fall wird der Wert an der Referenzrolle direkt gemessen. Hierfür geeignet sind zum Beispiel sogenannte "DMS-Aufnehmer" (Dehnungsmessstreifen) oder damit ausgestattete Messgeräte, wie Drehmomentenmesswellen. Das Drehmoment stellt sich infolge des tatsächlich wirkenden Gewichts des abgezogenen Glasstrangs ein, so dass die genaue Kenntnis dieses Gewichts nicht erforderlich ist. Das Drehmoment oder die zeitliche Änderung desselben können aber auch auf Basis der konkreten verfahrenstechnischen und apparativen Gegebenheiten, wie dem aktuellen Außendurchmesser der Referenzrolle, dem Reibungswiderstand beim Abrollen und dem Gewicht des abgezogenen Glasstrangs (oder dem Volumen desselben) errechnet werden.

Dadurch, dass die Drehmomente beim Abrollen der Rollkörper der ersten Abzugseinheit anhand des Drehmoments der Referenzrolle koordiniert werden, wird gewährleistet, dass die Rollkörper der Abzugseinheit gleiche oder ähnliche Umfangsgeschwindigkeiten aufweisen. Im Idealfall üben alle Rollkörper der Abzugseinheit auf den Glasstrang gleiche Kräfte aus. Gangunterschiede zwischen den Rollkörpern und dadurch verursachte Verletzungen der Oberfläche des Glasstrangs werden so vermieden.

Sowohl die Ermittlung des Soll-Drehmoments, als auch die Einstellung des Drehmoments der Hilfs-Rollkörper anhand des Soll-Drehmoments erfolgt während des Ziehprozesses mehrmals, vorzugsweise kontinuierlich. Änderungen des Soll-Drehmoments - etwa aufgrund von Gewichtsänderungen des Glasstrangs oder von Unrundheiten der Referenzrolle - werden so laufend berücksichtigt und dadurch bedingte Gangunterschiede zwischen den Rollkörpern können vermieden werden. Das Drehmoment des Hilfs-Rollkörpers oder der Hilfs-Rollkörper entspricht im Idealfall genau dem Drehmoment der Referenzrolle. Das Soll-Drehmoment der Referenzrolle wird laufend (mehrmals, vorzugsweise kontinuierlich) neu ermittelt. Damit ergibt sich ein variables Soll-Drehmoment als Vorgabe für den mindestens einen Hilfs-Rollkörper. Vorzugsweise wird das Drehmoment des mindestens einen Hilfs-Rollkörpers auf dieses variable Soll-Drehmoment geregelt.

Es hat sich als günstig erwiesen, einen Abzug einzusetzen, der mindestens eine mehrere Rollkörper umfassende zweite Abzugseinheit aufweist. Die zweite Abzugseinheit ist - in Richtung der Glasstrang-Längsachse gesehen - oberhalb oder unterhalb der ersten Abzugseinheit angeordnet. Es können mehrere axial beabstandete Abzugseinheiten eingesetzt werden. Unter einer "zweiten Abzugseinheit" wird hier und im Folgenden jede weitere - zweite, dritte, vierte usw. - Abzugseinheit verstanden. Die Rollkörper der zweiten Abzugseinheit sind in axialer Richtung gesehen übereinander oder versetzt zueinander angeordnet.

Die zweite Abzugseinheit umfasst mindestens zwei Rollkörper. Es ist nicht erforderlich, dass die Anzahl, Geometrie oder Anordnung der Rollkörper von erster und zweiter Abzugseinheit übereinstimmen. Im Übrigen gilt hinsichtlich der Geometrie und der Anordnung der Rollkörper der zweiten und jeder weiteren Abzugseinheit am Glasstrang das oben für die Rollkörper der ersten Abzugseinheit Gesagte entsprechend.

Der Einsatz mehrerer axial am Glasstrang verteilter Abzugseinheiten ermöglicht eine gleichmäßigere Verteilung der zur Halterung und Führung des Glasstrangs erforderlichen Kräfte und damit eine Reduzierung der Anpresskraft der einzelnen Rollkörper. Oberflächenbeschädigungen werden so vermieden oder reduziert.

Im Hinblick hierauf hat es sich als besonders vorteilhaft erwiesen, wenn die Rollkörper der mindestens einen zweiten Abzugseinheit in Richtung senkrecht zur Längsachse des Glasstrangs bewegbar sind. Diese Rollkörper zeichnen sich somit dadurch aus, dass ihre "radiale Position" (in Richtung senkrecht zur Längsachse des Glasstrangs gesehen) beim Ziehprozess nicht fest sondern variabel ist. Somit können die Rollkörper im Falle eines gebogenen Glasstrang der Biegung folgend in radialer Richtung nachgeführt werden. Dadurch wird vermieden, dass Kräfte entstehen, die nicht senkrecht zur Glasstrang-Längsachse wirken. Derartige Kräfte würden sich andernfalls durch Hebelwirkung auf den Bereich der erweichten Zone auswirken und dabei zu einer zusätzlichen Verschlechterung der Maßhaltigkeit des Glasstrangs führen. Die radiale Nachführung wird beispielsweise durch motorisches Nachführen (Positionieren) der Rollkörper an den Glasstrang und besonders vorteilhaft durch ein "Schwebekissen" erreicht, das eine radiale Gleitbewegung der Rollkörper (bzw. von deren Halterungen) nahezu ohne Reibungswiderstand ermöglicht.

Eine weitere Verbesserung ergibt sich dadurch, dass die Rollkörper der mindestens einen zweiten Abzugseinheit als Hilfs-Rollkörper eingesetzt werden, bei denen das Drehmoment anhand des Drehmoments des Referenz-Rollkörpers eingestellt wird. Hierbei wird nicht nur das Drehmoment der Hilfs-Rollkörper der ersten Abzugseinheit, sondern auch das Drehmoment der Rollkörper der zweiten (oder auch jeder weiteren) Abzugseinheit koordiniert. Das Soll-Drehmoment ergibt sich für alle Hilfs-Rollkörper, die im Eingriff mit dem Glasstrang sind, aus dem Wert für das Drehmoment der Referenzrolle, wie dies oben für den mindestens einen Hilfs-Rollkörper der ersten Abzugseinheit näher beschrieben ist. Das Drehmoment der Hilfs-Rollkörper wird auf das Soll-Drehmoment eingestellt oder daraufhin eingeregelt. Durch die Vielzahl der Rollkörper, die mit dem Glasstrang in Eingriff sind, gelingt es einerseits, die für die Halterung und Führung des Glasstrangs erforderliche Kraft gleichmäßiger zu verteilen, und dadurch die lokal durch jeden einzelnen Rollkörper wirkende Anpresskraft gering zu halten, und andererseits werden durch die Koordination der Drehmomente Gangunterschiede zwischen den einzelnen Rollkörpern verringert oder vermieden. In einem besonders bevorzugten Fall wird das Drehmoment für jeden Rollkörper im Eingriff mit dem Glasstrang separat geregelt.

Es hat sich besonders bewährt, die Rollkörper mit einer einstellbaren Anpresskraft gegen den Glasstrang zu drücken. Die Anpresskraft kann für jeden der Rollkörper individuell eingestellt werden, oder auf den gleichen Wert für alle Rollkörper einer Abzugseinheit, oder auf den gleichen Wert für alle Rollkörper des Abzugs insgesamt. Das Einstellen erfolgt durch Steuerung oder durch Regelung. Durch eine gesteuerte oder geregelte Einstellung lassen sich die Anpresskräfte gezielt auf die einzelnen Rollkörper verteilen und damit lokal hohe Anpresskräfte vermeiden. Der Vorschub der Rollkörper zum Erzeugen der Anpresskraft kann hydraulisch, pneumatisch oder durch einen Motor erfolgen.

Es hat sich als besonders günstig erwiesen, die Anpresskraft in Abhängigkeit vom Gewicht des abgezogenen Glasstrangs einzustellen. Mittels der Anpresskraft der Rollkörper und der dadurch erzeugten Haftreibung mit dem Glasstrang wird die vertikal nach unten wirkende Gewichtskraft abgetragen. Eine gewisse Haftreibung, unterhalb der es zu einem Durchrutschen des Glasstrangs käme, darf dabei nicht unterschritten werden. Das Gewicht des Glasstrangs nimmt bis zum Abtrennen des Teilstücks der gewünschten Länge kontinuierlich zu. Daher werden im einfachsten Fall die Rollkörper von Anfang an mit einer Anpresskraft gegen den Glasstrang gedrückt, die ausreicht, das maximal zu erwartende Gewicht abzutragen. Alternativ dazu wird die die Anpresskraft mit zunehmendem Gewicht kontinuierlich oder schrittweise erhöht. Durch die letztgenannte Verfahrensvariante lassen sich Oberflächenschäden weiter minimieren.

Im Hinblick hierauf hat es sich als besonders vorteilhaft erwiesen, bei Überschreiten einer vorgegebenen maximalen Anpresskraft bei den Rollkörpern der ersten Abzugseinheit, zusätzlich die Rollkörper der zweiten Anzugseinheit in Eingriff mit dem Glasstrang zu bringen, oder alternativ dazu, die Anpresskraft bei bereits in Eingriff mit dem Glasstrang befindlichen Rollkörpern der zweiten Anzugseinheit zu erhöhen. Bei dieser Verfahrensweise wird für die Anpresskraft eines Rollkörpers ein maximal zulässiger Wert vorgegeben (im Folgenden "Maximalwert" genannt). Die zum Abtragen des Gewichts aufzubringende Haftreibung wird zunächst (bei geringem Gewicht) mit wenigen Rollkörpern der ersten Abzugseinheit erzeugt. Diese werden entweder von Anfang an mit vorgegebener Anpresskraft (≤ Maximalwert) gegen den Glasstrang gedrückt oder die Anpresskraft wird mit zunehmendem Gewicht des Glasstrangs erhöht. Sobald die durch die Rollkörper der ersten Abzugseinheit aufzubringende Haftreibung nicht mehr ausreicht, um das Gewicht des Glasstrangs abzutragen, werden entweder weitere Rollkörper in Eingriff mit dem Glasstrang gebracht, die dann ebenfalls durch ihre Anpresskraft und die dadurch erzeugte Haftreibung einen Teil des Gewichts des Glasstrangs abfangen, oder die Anpresskraft wird bei Rollkörpern erhöht, die zwar bereits im Eingriff mit dem Glasstrang sind, aber mit einer Anpresskraft unterhalb des vorgegebenen Maximalwerts. Sobald zusätzliche Haftreibung durch Rollkörper der zweiten (und jeder weiteren Abzugseinheit) bereitgestellt ist, kann die Anpresskraft der Rollkörper der ersten Abzugseinheit wieder gesenkt werden. Im Idealfall wird allen Rollkörpern, die mit dem Glasstrang in Eingriff sind, die gleiche Anpresskraft aufgeprägt, wobei die Anpresskraft gerade so hoch eingestellt wird, dass sie in Verbindung mit dem Glasstrang eine Haftreibung erzeugt, die bei dem jeweiligen Gewicht ein Durchrutschen des Glasstrangs gerade noch verhindert.

Eine weitere Verbesserung ergibt sich dadurch, dass die Regelung der Anpresskraft ein Dämpfungsglied umfasst. Das Dämpfungsglied hat eine kleinere Federkonstante als die Mechanik des Abzugs, so dass es deren Eigenschwingungen dämpft. Dadurch werden Überschwinger vermieden, was sich für die Regelung der Anpresskraft insbesondere bei schnellen Gewichtsänderungen, etwa beim Abtrennen eines Glasstrang-Teilstücks, als besonders vorteilhaft erweist. Das Dämpfungsglied ist in einer bevorzugten Ausführungsform der Erfindung als mechanisches Federelement ausgebildet, beispielsweise als Torsionsfeder.

Durch das Anpressen der Rollkörper wird die zum Abtragen des Glasstrang-Gewichts erforderliche Haftreibung erzeugt. Vorzugsweise werden Rollkörper mit einer Abrollfläche mit einem Reibungskoeffizienten im Bereich von 0,2 bis 0,5 eingesetzt. Bei einer Abrollfläche mit hohem Reibungskoeffizienten genügt eine geringe Anpresskraft zur Erzeugung einer ausreichenden Haftreibung. Allerdings bedingt ein hoher Reibungskoeffizient in der Regel eine Abrollfläche mit deutlicher Oberflächenstruktur, die zu Verletzungen des Glasstrangs führen kann. Dieser Nachteil wird durch eine Abrollfläche mit niedrigem Reibungskoeffizienten vermieden. Allerdings ist dann eine hohe Anpresskraft zur Erzeugung einer ausreichenden Haftreibung erforderlich, was ebenfalls zu Verletzungen des Glasstrangs führen kann. In dieser Hinsicht erweist sich eine Abrollfläche mit einem Reibungskoeffizienten im oben genannten Bereich als geeigneter Kompromiss.

Als Materialien für die Abrollfläche haben sich Werkstoffe besonders bewährt, die Asbest, Asbestersatzstoffe oder SiC enthalten. Die Rollkörper bestehen aus den genannten Materialien oder sie sind im Bereich ihrer Abrollfläche damit beschichtet. Die genannten Materialien können auch auf einem Träger, beispielsweise auf einem Netz, Gitter, Gewebe, Gestrick oder dergleichen aus Metall oder Graphit aufgebracht sein. Neben einer guten Abriebfestigkeit ist eine hohe Hitzebeständigkeit wesentlich. Als Beispiel für Asbestersatzstoffe seien Kalziumsilikat und Aluminiumsilikat genannt.

Hinsichtlich der Vorrichtung wird die oben angegebene Aufgabe ausgehend von einer Vorrichtung der eingangs genannten Gattung erfindungsgemäß einerseits dadurch gelöst, dass eine Einrichtung zur Ermittlung des Drehmoments beim Abrollen des Referenz-Rollkörpers und eine Einrichtung zum Einstellen des Drehmoment bei dem mindestens einen Hilfs-Rollkörper auf ein Soll-Drehmoment vorgesehen sind.

Hinsichtlich der Ausbildung und Anordnung der Rollkörper und der Definitionen für die auch im Folgenden verwendeten Begriffe "Referenz-Rollkörper" und "Hilfs-Rollkörper" wird auf die obigen Erläuterungen zum erfindungsgemäßen Verfahren verwiesen.

Die erfindungsgemäße Vorrichtung zeichnet sich dadurch aus, dass eine Einrichtung zur Ermittlung des Drehmoment beim Abrollen des Referenz-Rollkörpers und eine Einrichtung zum Einstellen des Drehmoment bei dem mindestens einen Hilfs-Rollkörper vorgesehen sind. Mittels der Einrichtung zur Ermittlung des Drehmoments wird das Drehmoment der Referenzrolle oder ein mit diesem Drehmoment korrelierbarer Wert ermittelt, und der ermittelte Wert wird als Maß für das Drehmoment der übrigen Rollkörper der ersten Abzugseinheit herangezogen.

Der Wert des Drehmoments der Referenzrolle lässt sich sowohl messtechnisch als auch rechnerisch ermitteln. Im erstgenannten Fall ist eine Messvorrichtung zur Messung des an der Referenzrolle wirkenden Drehmoments vorgesehen. Hierfür geeignet sind zum Beispiel sogenannte "DMS-Aufnehmer" (Dehnungsmessstreifen) oder damit ausgestattete Messgeräte, wie Drehmomentenmesswellen. Mittels der Messvorrichtung wird die an der Referenzrolle in Richtung des abgezogenen Glasstrangs wirkende Kraft erfasst, die sich in Abhängigkeit vom aktuellen Gewicht des abgezogenen Glasstrangs ergibt.

Das Drehmoment beim Abrollen der Rollkörper der ersten Abzugseinheit wird anhand des Drehmoments der Referenzrolle koordiniert. Hierzu ist eine Einrichtung zum Einstellen des Drehmoments bei dem mindestens einen Hilfs-Rollkörper auf das Soll-Drehmoment vorgesehen. Die Einrichtung zum Einstellen des Drehmoments umfasst zum Beispiel einen Antrieb für die Abrollbewegung des jeweiligen Rollkörper, der mit einem Drehzahlregler mit Korrektureingang verbunden ist, und eine Messvorrichtung zur Messung des am jeweiligen Rollkörper wirkenden Drehmoments. Über die Einstellung der Drehzahl beim Abrollen ermöglicht eine derartige Einrichtung eine geregelte Einstellung des aktuellen Drehmoments auf ein Soll-Drehmoment, das vom Drehmoment der Referenzrolle abgeleitet wird.

Die Einstellung des Drehmoments des oder der Hilfs-Rollkörper erfolgt mehrmals während des Ziehprozesses oder kontinuierlich. Vorzugsweise wird das Soll-Drehmoment kontinuierlich auf den Wert des Drehmoments des Referenz-Rollkörpers eingestellt. Änderungen des Drehmoment des Referenz-Rollkörpers zum Beispiel aufgrund von Gewichtsänderungen des Glasstrangs oder aufgrund von Abrieb beim Referenz-Rollkörper werden über eine entsprechende Anpassung des Soll-Drehmoments berücksichtigt. So wird gewährleistet, dass die Rollkörper der Abzugseinheit stets gleiche oder ähnliche Umfangsgeschwindigkeiten aufweisen und Gangunterschiede zwischen den Rollkörpern vermieden werden.

Es wird eine Ausführungsform der erfindungsgemäßen Vorrichtung bevorzugt, bei welcher der Abzug mindestens eine mehrere Rollkörper umfassende zweite Abzugseinheit aufweist. Die zweite Abzugseinheit ist - in Richtung der Glasstrang-Längsachse gesehen - oberhalb oder unterhalb der ersten Abzugseinheit angeordnet. Es können mehrere axial beabstandete Abzugseinheiten eingesetzt werden. Unter einer "zweiten Abzugseinheit" wird hier und im Folgenden jede weitere - zweite, dritte, vierte usw. - Abzugseinheit verstanden.

Die zweite Abzugseinheit umfasst mindestens zwei Rollkörper. Es ist nicht erforderlich, dass die Anzahl, Geometrie oder Anordnung der Rollkörper von erster und zweiter Abzugseinheit übereinstimmen. Hinsichtlich der Geometrie und der Anordnung der Rollkörper der zweiten und jeder weiteren Abzugseinheit am Glasstrang gilt das oben für die Rollkörper der ersten Abzugseinheit Gesagte entsprechend.

Die mindestens eine zweite Abzugseinheit wird vorzugsweise im selben Rahmen gehalten wie die erste Abzugseinheit, wobei die Rollkörper der zweiten Abzugseinheit in Richtung senkrecht zur Längsachse des Glasstrangs bewegbar an dem Rahmen gelagert sind. Diese Rollkörper zeichnen sich somit dadurch aus, dass ihre "radiale Position" (in Richtung senkrecht zur Längsachse des Glasstrangs gesehen) beim Ziehprozess nicht fest sondern variabelist. Somit können die Rollkörper im Falle eines gebogenen Glasstrang der Biegung folgend in radialer Richtung nachgeführt werden. Dadurch wird die Ausbildung von Kräften vermieden, die nicht senkrecht zur Glasstrang-Längsachse wirken. Die radiale Nachführung wird beispielsweise durch einen motorischen, hydraulischen oder einen pneumatischen Antrieb erreicht. Besonders vorteilhaft wird hierfür ein "Schwebekissen" eingesetzt, das eine radiale Gleitbewegung der Rollkörper (bzw. von deren Halterungen) nach Art eines Luftkissens nahezu ohne Reibungswiderstand ermöglicht.

Eine weitere Verbesserung ergibt sich dadurch, dass die Rollkörper der zweiten Abzugseinheit mit einer Einrichtung zum Einstellen des Drehmoments verbunden sind. Dadurch lasen sich die Rollkörper der zweiten Abzugseinheit ebenfalls als "Hilfs-Rollkörper" im Sinne dieser Erfindung betreiben. Das heißt, dass deren Drehmoment mittels der jeweiligen Einrichtung zum Einstellen des Drehmoments einstellbar ist. Das Soll-Drehmoment ergibt sich für alle Hilfs-Rollkörper aus dem Wert für das Drehmoment der Referenzrolle. Durch die Rollkörper der zweiten (und weiteren) Abzugseinheit gelingt es einerseits, die für die Halterung und Führung des Glasstrangs erforderliche Kraft auf die Anpresskräfte einer Vielzahl von Rollkörpern, die mit dem Glasstrang in Eingriff sind, zu verteilen, somit die lokal durch jeden einzelnen Rollkörper wirkende Anpresskraft gering zu halten, und andererseits durch die Koordination der Drehmomente Gangunterschiede zwischen den einzelnen Rollkörpern zu verringern oder zu vermeiden. Im Idealfall ist für jeden Rollkörper im Eingriff mit dem Glasstrang eine separate Einrichtung zur Einstellung des Drehmoments vorgesehen.

Bei einer besonders bevorzugten Ausführungsform der erfindungsgemäßen Vorrichtung ist eine Anpresskraftregeleinheit vorgesehen, mittels der die Rollkörper mit einer einstellbaren Anpresskraft gegen den Glasstrang gedrückt werden. Die Anpresskraft kann für jeden der Rollkörper individuell eingestellt werden, oder auf den gleichen Wert für alle Rollkörper einer Abzugseinheit, oder auf den gleichen Wert für alle Rollkörper des Abzugs insgesamt.

Das Einstellen der Anpresskraft erfolgt geregelt durch die Anpresskraftregeleinheit. Durch die geregelte Einstellung lassen sich die Anpresskräfte gezielt auf die einzelnen Rollkörper verteilen und damit lokal hohe Anpresskräfte vermeiden. Außerdem kann die Anpresskraft in Abhängigkeit vom Gewicht des abgezogenen Glasstrangs eingestellt werden. Hierzu wird auf obige Erläuterungen zum erfindungsgemäßen Verfahren verwiesen.

Als besonders vorteilhaft hat es sich erwiesen, wenn die Anpresskraftregeleinheit ein Dämpfungsglied umfasst. Das Dämpfungsglied hat eine kleinere Federkonstante als die Mechanik des Abzugs, so dass es deren Eigenschwingungen dämpft. Das Dämpfungsglied ist in einer bevorzugten Ausführungsform der Erfindung als mechanisches Federelement ausgebildet, beispielsweise als Torsionsfeder.

Eine Schwenkvorrichtung, mittels der der Rahmen um einen Kippwinkel zur Vertikalen schwenkbar ist, hat sich besonders bewährt. Für den Fall, dass die Mittelachse des abgezogenen Glasstrangs von der Vertikalen abweicht, kann der Abzug, inklusive der jeweiligen Abzugseinheiten mittels der Schwenkvorrichtung um den entsprechenden Winkel aus der Vertikalen verkippt werden.

Weiterhin wird die oben angegebene Aufgabe hinsichtlich der Vorrichtung ausgehend von einer Vorrichtung der eingangs genannten Gattung erfindungsgemäß dadurch gelöst, dass die Rollkörper mit einer Abrollfläche mit einem Reibungskoeffizienten im Bereich von 0,2 bis 0,5 versehen sind.

Hinsichtlich der Ausbildung und Anordnung der Rollkörper und der Definitionen für die auch im Folgenden verwendeten Begriffe "Referenz-Rollkörper" und "Hilfs-Rollkörper" wird auf die obigen Erläuterungen zum erfindungsgemäßen Verfahren verwiesen.

Die erfindungsgemäße Vorrichtung zeichnet sich durch Rollkörper mit einer Abrollfläche mit einem Reibungskoeffizienten im Bereich von 0,2 bis 0,5 aus. Bei einer Abrollfläche mit hohem Reibungskoeffizienten genügt eine geringe Anpresskraft zur Erzeugung einer ausreichenden Haftreibung. Allerdings bedingt ein hoher Reibungskoeffizient in der Regel eine Abrollfäche mit markanter Oberflächenstruktur, die zu Verletzungen des Glasstrangs führen kann. Dieser Nachteil wird durch eine Abrollfläche mit niedrigem Reibungskoeffizienten vermieden. Allerdings ist dann eine hohe Anpresskraft zur Erzeugung einer ausreichenden Haftreibung erforderlich, was ebenfalls zu Verletzungen des Glasstrangs führen kann. In dieser Hinsicht erweist sich ein Rollkörper mit einer Abrollfläche mit einem Reibungskoeffizienten im oben genannten Bereich als geeigneter Kompromiss.

Als Materialien für die Abrollfläche haben sich Werkstoffe besonders bewährt, die Asbest, Asbestersatzstoffe oder SiC enthalten. Die Rollkörper bestehen aus den genannten Materialien oder sie sind im Bereich ihrer Abrollfläche damit beschichtet. Die genannten Materialien können auch auf einem Träger, beispielsweise auf einem Netz, Gitter, Gewebe, Gestrick oder dergleichen aus Metall oder Graphit aufgebracht sein. Neben einer guten Abriebfestigkeit ist eine hohe Hitzebeständigkeit wesentlich. Als Beispiel für Asbestersatzstoffe seien Kalziumsilikat und Aluminiumsilikat genannt.

Nachfolgend wird die Erfindung anhand von Ausführungsbeispielen und einer Patentzeichnung näher erläutert. In der Zeichnung zeigen im Einzelnen:

**Figur 1** ein Schaltbild für eine Drehmomentregelung eines Abzugs zur Durchführung des erfindungsgemäßen Vertikalziehverfahrens, und

**Figur 2** ein Schaltbild für eine Regelung der Anpresskraft bei diesem Verfahren.

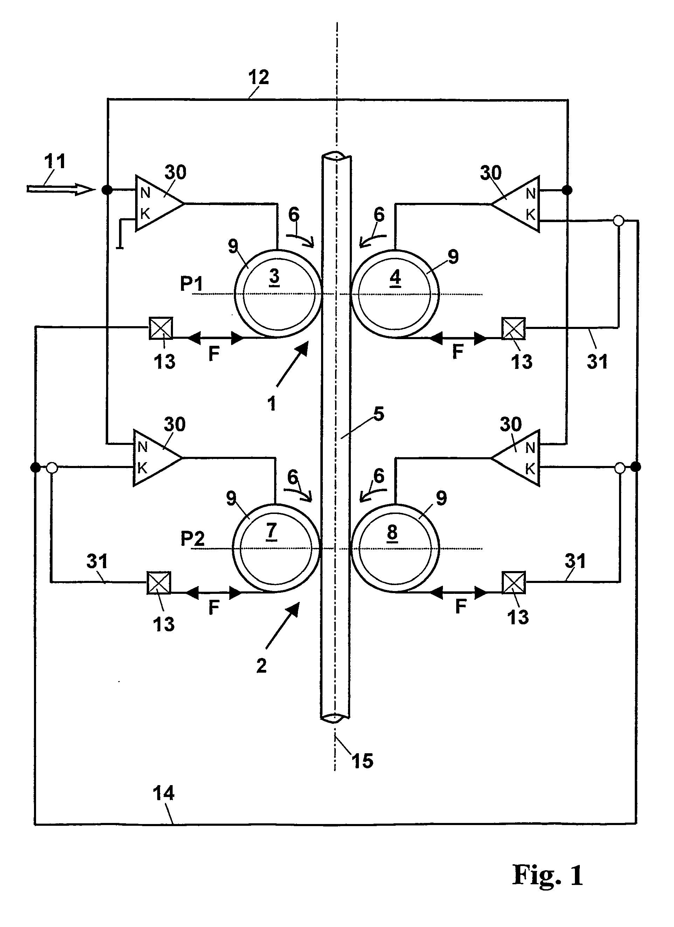

**Figur 1** zeigt ein Schaltbild für einen Abzug zum Ziehen eines Quarzglasstrangs 5 mit vertikal orientierter Längsachse 15, der eine obere Abzugseinheit 1 und eine untere Abzugseinheit 2 aufweist. Die obere Abzugseinheit 1 umfasst zwei Abzugsrollen 3; 4, die in einer festen, horizontalen Position P1 an einem Quarzglasstrang 5 gegenüberliegend angeordnet sind und an diesem mit gegensinniger Drehrichtung 6 abrollen. Gleichermaßen weist auch die untere Abzugseinheit 2 zwei, in der festen horizontalen Position P2 am Quarzglasstrang 5 gegenüberliegend angreifende Abzugsrollen 7; 8 auf, wobei zwischen P1 und P2 ein Abstand von 55 cm eingestellt ist. Die sich jeweils gegenüberliegenden Abzugsrollen 3; 4 bzw. 7; 8 werden mit vorgegebener Anpresskraft gegen den Quarzglasstrang 5 gerdrückt, wobei sich die Anpresskräfte gegenseitig kompensieren.

Bei den Abzugsrollen 3; 4; 7; 8 handelt es sich um Rollen mit einem anfänglichen nominalen Außendurchmesser von 215 mm und einer Breite von 100 mm aus Aluminium, deren zylindermantelförmige Abrollfläche 9 durch einen Belag aus Kalziumsilikat gebildet wird. Der Reibungskoeffizient der Abrollfläche an dem Quarzglasstrang 5 liegt bei ca. 0,36.

Nachfolgend wird das erfindungsgemäße Verfahren zur Einstellung des Drehmoments der Abzugsrollen 3; 4; 7; 8 beim Abrollen an dem Quarzglasstrang 5 anhand des in Figur 1 dargestellten Schaltbilds näher beschrieben.

Die Abzugsrolle 3, als einzige drehzahlgeregelte Abzugsrolle des Abzugs, bildet die "Referenzrolle" für die Abzugsregelung. Durch die Drehzahlregelung wird der Abzugsrolle 3 ein Nominalwert N für die Soll-Drehzahl vorgegeben, wie dies anhand des Input-Pfeiles 11 dargestellt ist. Der Nominalwert N ergibt sich aufgrund der erforderlichen Ziehgeschwindigkeit, die Stellgröße der Regelung für den Außendurchmesser des Quarzglasstrangs 5 ist. Im Ausführungsbeispiel ergibt sich bei einem Quarzglasstrang von 90,1 mm ein Nominalwert N für die Drehzahl der Referenzrolle 3 von 5,9 U/min.

Die Abzugsrollen 3; 4; 7; 8 sind jeweils mit einem separaten Drehzahlregler 30 verbunden. Einem Eingang der Drehzahlregler 30 wird jeweils der Nominalwert N für die Soll-Drehzahl der Referenzrolle 3 über die Verbindungsleitung 12 zugeführt. Dem zweiten Eingang wird jeweils über die Verbindungsleitung 14 ein Korrektursignal K zugeführt, die sich aus einer Messung des Drehmoments der Referenzrolle 3 und des jeweiligen Drehmoments der Abzugsrolle 4; 7; 8 ergibt.

Für die Messung des Drehmoments der Referenzrolle 3 (schematisch dargestellt durch den Blockpfeil F) ist ein DMS-Sensor (Biegebalken) 13 vorgesehen. Das an der Referenzrolle 3 wirkende Drehmoment F stellt sich dort aufgrund der aktuellen Gewichtskraft des Quarzglasstrangs 5 in Verbindung mit der Haftreibung und dem Außendurchmesser der Referenzrolle 3 ein. Der gemessene Wert für das Drehmoment F dient als "Soll-Drehmoment" für die übrigen Abzugsrollen 4; 7; 8 des Abzugs und bildet hierbei einen ersten Beitrag zu dem genannten Korrektursignal K.

Ein zweiter Beitrag zu dem Korrektursignal K ergibt sich aus Messwerten der Drehmomente der übrigen Abzugsrollen 4; 7; 8. Hierfür ist an jeder Abzugsrolle 4; 7; 8 jeweils ein DMS-Sensor 33 vorgesehen. Auch an den Abzugsrollen 4; 7; 8 stellt sich das Drehmoment F aufgrund der aktuellen Gewichtskraft des Quarzglasstrangs 5 in Verbindung mit der Haftreibung und dem Außendurchmesser der jeweiligen Abzugsrolle 4; 7; 8 ein.

Durch Vergleich von erstem und zweitem Beitrag ergibt sich das Korrektursignal K, das zum Nachjustieren der Drehmomente F an den Abzugsrollen 4; 7; 8 herangezogen wird. Hierzu ist für jede Abzugsrolle 4; 7; 8 eine separate Regelstrecke 31 vorgesehen, mittels der das jeweilige Drehmoment F auf das vorgegebene Soll-Drehmoment eingeregelt wird.

Die beschriebene Kombination von Drehzahl- und Drehmomenteregelung gewährleistet, dass alle Abzugsrollen 3; 4; 7; 8 des Abzugs die gleichen Umfangsgeschwindigkeiten aufweisen. Änderungen des Soll-Drehmoments (bei der Referenzrolle 3) - zum Beispiel aufgrund von Gewichtsänderungen des Glasstrangs 5 - werden unmittelbar erfasst und bei den übrigen Abzugsrollen 4; 7; 8 berücksichtigt. Ebenso werden Änderungen bei den Abzugsrollen 4; 7; 8 berücksichtigt, die zu einer Änderung des jeweiligen Drehmoments F führen - wie eine Verringerung des Außendurchmessers - indem das Drehmoment F der Abzugsrolle 4; 7; 8 dementsprechend nachjustiert wird.

Oberflächenverletzungen des Quarzglasstrangs 5 durch Gangunterschiede zwischen den Abzugsrollen 3; 4; 7; 8 werden so vermieden.

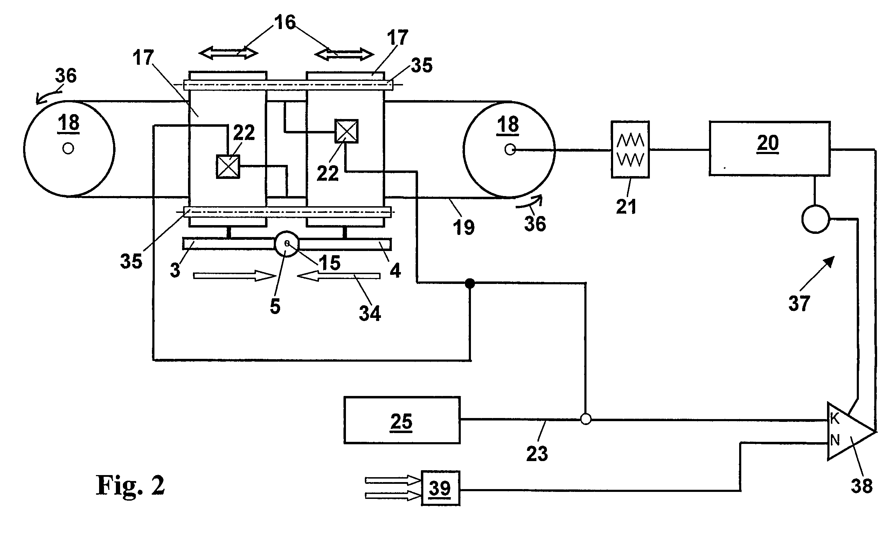

Zusätzlich wird die Anpresskraft, mit der die Abzugsrollen 3; 4; 7; 8 gegen den Quarzglasstrang 5 drücken, kontinuierlich überwacht und geregelt. Diese Regelung wird im Folgenden anhand des in Figur 2 dargestellten Beispiels näher beschrieben.

**Figur 2** zeigt die Regeleinheit zur Regelung der Anpresskraft am Beispiel des Rollenpaares der oberen Abzugseinheit 1. Die Abzugsrollen 3; 4 werden mit einer einstellbaren, durch die Richtungspfeile 34 symbolisierten Kraft im Bereich zwischen 10 und 65 kp, gegen den Quarzglasstrang 5 gedrückt, indem die Abzugsrollen 3; 4 in Richtung senkrecht zur Längsachse 15 des Quarzglasstrangs 5, die hier senkrecht zur Blattebene verläuft, hin- und herbewegt werden, wie dies die Richtungspfeile 16 andeuten. Hierzu sind die Abzugsrollen 3; 4 jeweils an einem Träger 17 befestigt. Die Träger 17 sind auf einem Gleitlager 35 gleitbar gelagert, wobei sie mittels eines über zwei Walzen 18 umlaufenden Riemen 19 auf ihrer horizontalen Ebene aufeinander zu oder voneinander weg bewegt werden. Im Ausführungsbeispiel führt die Rotation der Walzen 18 in der durch den Richtungspfeil 36 dargestellten Richtung dazu, dass sich die Träger 17 und damit die Abzugsrollen 3; 4 aufeinander zu bewegen. Die Rotation der Walzen 18 erfolgt durch einen Motor 20. Zwischen dem Motor 20 und den Walzen 18 ist eine Torsionsfeder 21 vorgesehen.

Durch die Anpresskraft 34 der Abzugsrolle 3; 4 wird eine Haftreibung mit dem Quarzglasstrang erzeugt, die ausreichend ist, um das Gewicht des Quarzglasstrangs 5 aufzufangen. Eine Mindest-Haftreibung, unterhalb der es zu einem Durchrutschen des Quarzglasstrangs 5 käme, darf nicht unterschritten werden. Andererseits ist eine möglichst geringe Anpresskraft 34 erwünscht, um

Beschädigungen der Strang-Oberfläche zu vermeiden. Die Anpresskraft 34 wird deshalb so hoch eingestellt, dass sie in Verbindung mit dem Quarzglasstrang 5 eine Haftreibung erzeugt, die ein Durchrutschen des Quarzglasstrangs sicher verhindert, jedoch einen vorgegebenen Maximalwert (65 kp) nicht überschreitet. Der Maximalwert wird mittels Rechner 25 in einen Regelkreis 37 eingespeist.

Die Abzugsrollen 3; 4 werden mit einer anfänglichen Anpresskraft 34 von 10 kp gegen den Quarzglasstrang 5 gepresst. Da das Gewicht des Quarzglasstrangs 5 bis zum Abtrennen eines Teilstücks der gewünschten Länge zunimmt, wird die Anpresskraft 14 kontinuierlich erhöht. Hierzu wird das aktuelle Gewicht des Quarzglasstrangs 5 mittels Rechner 25 berechnet. Die Anpresskraft 34 wird mittels Kraftmessdosen 22 fortlaufend gemessen und der Mittelwert dieser Messwerte mit einem vom Rechner 25 ermittelten Sollwert (Leitung 23), der das aktuelle Gewicht des abgezogenen Quarzglasstrangs 5 berücksichtigt, verglichen. Der resultierende Vergleichswert wird einem Regler 38 des Regelkreises 37 als Korrekturwert K zugeführt, der den Motor 20 regelt. Je nach Gewicht des Quarzglasstrangs 5 wird die Anpresskraft 34 erhöht - solange sie geringer ist als die vorgegebene Maximalkraft - oder verringert.

Die Torsionsfeder 21 hat eine kleinere Federkonstante als die Mechanik des Abzugs. Sie verhindert daher ein Überschwingen der Regelung, insbesondere bei plötzlichen Änderungen der Regelparameter, wie beim Ablängen des Quarzglasstrangs 5.

Das Signal zum Öffnen oder Schließen der Abzugsrollen 3; 4 wird durch eine speicherprogrammierbare Steuereruung (SPS) 39 vorgegeben, über die auch der Nominalwert für die Anpresskraft vorgegeben wird.

In einer hier nicht dargestellten Verfahrensvariante wird die zum Halten des Quarzglasstrangs erforderliche Anpresskraft rechnergesteuert (Rechner 25) auf die Abzugsrollen 3; 4; 7; 8 der beiden Abzugseinheiten 1; 2 gleichmäßig verteilt. Hierzu ist die untere Abzugseinheit 2 ist mit einer entsprechenden Mess-, Regel- und Bewegungseinrichtung versehen, wie sie für die obere Abzugseinheit 1 in Figur 2 dargestellt ist. Die Abzugsrollen 7; 8 der unteren Abzugseinheit 2 werden hierbei erst in Eingriff mit dem Quarzglasstrang 5 gebracht, wenn die Anpresskraft 34 der Abzugsrolle 3; 4 die maximale Anpresskraft von 65 kp überschreitet oder wenn aus anderen Gründen eine gleichmäßige Verteilung der erforderlichen Anpresskraft auf mehrere Abzugsrollen sinnvoll ist. Sobald die zusätzliche Haftreibung durch die Abzugsrollen 7; 8 bereitsteht, wird die Anpresskraft der Abzugsrollen 3; 4 rechnergesteuert (Rechner 25) wieder soweit gesenkt, dass alle Abzugsrollem 3; 4; 7; 8 die gleiche Anpresskraft 14 erzeugen. Die Anpresskraft der Abzugsrollen 7; 8 wird ebenfalls geregelt, wobei eine Regeleinheit eingesetzt wird, wie in Figur 2 dargestellt.

Außerdem sind die Abzugsrollen 7; 8 der unteren Abzugseinheit 2 mittels der Träger 17, Walzen 18, Riemen 19 und Motor 20 umfassenden Einrichtung auch insgesamt senkrecht zur Längsachse 15 des Quarzglasstrangs 5 verschiebbar. Die "radiale Position" der Abzugsrollen 7; 8 ist somit variabel. Dadurch können diese Abzugsrollen 7; 8 im Fall einer auftretenden Biegung des Quarzglasstrangs 5 der Biegung folgen und in radialer Richtung rechnergesteuert nachgeführt werden. Alternativ hierzu wird für die radiale Nachführung wird ein "Schwebekissen" eingesetzt, das eine radiale Gleitbewegung der Abzugsrollen 7; 8 Rollkörper nahezu ohne Reibungswiderstand ermöglicht. Ein derartige rein mechanische Nachführung ist kostengünstiger realisierbar als eine rechnergesteuerte Nachführung und daher insbesondere für Abzugsrollen einer dritten Ebene besonders geeignet.

Die Abrollflächen 9 der Abzugsrollen 3; 4; 7; 8 werden durch einen Belag aus Kalziumsilikat gebildet wird. Dabei handelt es sich um einen Asbest-Ersatzstoff, der sich durch hohe Temperaturbeständigkeit und hohen Reibungskoeffizienten auszeichnet. In Verbindung mit einem Quarzglasstrang werden Reibungskoeffizienten um 0,36 gemessen. Zur Verlängerung der Standzeit werden die Abzugsrollen 3; 4; 7; 8 zusätzlich gekühlt. Die Kühlung erfolgt dadurch, dass die Oberfläche des Quarzglasstrangs 5 oberhalb der Abzugsrollen 3; 4; 7; 8 mittels eines Stickstoffstromes angeblasen werden.

In Tabelle 1 sind Beispiele für aktuelle Messwerte der Drehzahl, der Haltekraft und der Anpresskraft 34 während des erfindungsgemäßen Vertikalziehverfahrens angegeben.

**Tabelle 1**

| Drehzahl Abzugseinheit 1 | Abzugsrolle 3 | 5,76 min$^{-1}$ |
|---|---|---|
|  | Abzugsrolle 4 | 5,77 min$^{-1}$ |
|  |  |  |
| Drehzahl Abzugseinheit 2 | Abzugsrolle 7 | 5,75 min$^{-1}$ |
|  | Abzugsrolle 8 | 5,75 min$^{-1}$ |
|  |  |  |
| Haltekraft Abzugseinheit 1 | Abzugsrolle 3 | -12,34 Kp |
|  | Abzugsrolle 4 | -12,41 Kp |
|  |  |  |
| Haltekraft Abzugseinheit 2 | Abzugsrolle 7 | -12,42 Kp |
|  | Abzugsrolle 8 | -12,43 Kp |

(fortgesetzt)

| | | |
|---|---|---|
| Anpresskraft Abzugseinheit 1 | | 64,4 Kp |
| | | |
| Anpresskraft Abzugseinheit 2 | | 64,1 Kp |

Die Haltekraft ist hierbei ein Maß für das Drehmoment der jeweiligen Abzugsrolle. Aus den Messwerten, die eine Momentaufnahme während des Ziehverfahrens widerspiegeln, ist ersichtlich, dass sich bei dem erfindungsgemäßen Verfahren aufgrund der kombinierten Regelung von Drehzahl- und Drehmoment (Haltekraft) bei den einzelnen Abzugsrollen unterschiedliche Werte für diese Parameter einstellen.

**Patentansprüche**

1. Verfahren zur Herstellung eines zylinderförmigen Glaskörpers, insbesondere eines Quarzglaskörpers, in einem Vertikalziehprozess, umfassend einen Verfahrensschritt, in welchem ein Glasrohling einer Heizzone zugeführt, darin bereichsweise erweicht und aus dem erweichten Bereich ein Glasstrang mit geregelter Ziehgeschwindigkeit mittels eines Abzugs abgezogen wird, der eine erste Abzugseinheit mit am Glasstrang abrollenden und um dessen Umfang verteilten Rollkörpern, die von einem Referenz-Rollkörper und mindestens einem Hilfs-Rollkörper gebildet werden, aufweist, wobei die Ziehgeschwindigkeit über die Drehzahl des Referenz-Rollkörpers geregelt wird, **dadurch gekennzeichnet, dass** ein Wert für das Drehmoment des Referenz-Rollkörpers (3) ermittelt wird, der vom Gewicht des abgezogenen Glasstrangs (5) abhängt, und dass der ermittelte Wert als Soll-Drehmoment für die Einstellung des Drehmoments bei dem mindestens einen Hilfs-Rollkörper (4; 7; 8) unter Berücksichtigung von dessen Außendurchmesser herangezogen wird.

2. Verfahren nach Anspruch 1, **dadurch gekennzeichnet, dass** das Drehmoment bei dem mindestens einen Hilfs-Rollkörper (4; 7; 8) auf das Soll-Drehmoment geregelt wird.

3. Verfahren nach Anspruch 1 oder 2, **dadurch gekennzeichnet, dass** ein Abzug eingesetzt wird, der mindestens eine mehrere Rollkörper (3; 4; 7; 8) umfassende zweite Abzugseinheit (2) aufweist.

4. Verfahren nach Anspruch 3, **dadurch gekennzeichnet, dass** die Rollkörper (7; 8) der mindestens einen zweiten Abzugseinheit (2) in Richtung senkrecht zur Längsachse (15) des Glasstrangs (5) bewegbar sind.

5. Verfahren nach Anspruch 3 oder 4, **dadurch gekennzeichnet, dass** die Rollkörper der mindestens einen zweiten Abzugseinheit als Hilfs-Rollkörper (7; 8) eingesetzt werden, wobei deren Soll-Drehmoment anhand des Drehmoments des Referenz-Rollkörpers (3) eingestellt wird.

6. Verfahren nach einem der vorhergehenden Ansprüche, **dadurch gekennzeichnet, dass** die Rollkörper (3; 4; 7; 8) mit einer einstellbaren Anpresskraft (34) gegen den Glasstrang (5) gedrückt werden.

7. Verfahren nach Anspruch 6, **dadurch gekennzeichnet, dass** die Anpresskraft (34) in Abhängigkeit vom Gewicht des abgezogenen Glasstrangs (5) eingestellt wird.

8. Verfahren nach Anspruch 3 und einem der Ansprüche 6 oder 7, **dadurch gekennzeichnet, dass** bei Überschreiten einer vorgegebenen maximalen Anpresskraft bei den Rollkörpern (3; 4) der ersten Abzugseinheit (1), zusätzlich die Rollkörper (7; 8) der zweiten Anzugseinheit (2) in Eingriff mit dem Glasstrang (5) gebracht werden oder die Anpresskraft bei in Eingriff mit dem Glasstrang befindlichen Rollkörpern der zweiten Anzugseinheit erhöht wird.

9. Verfahren nach einem der Ansprüche 7 oder 8, **dadurch gekennzeichnet, dass** die Regelung der Anpresskraft (14) ein Dämpfungsglied (21) umfasst.

10. Verfahren nach einem der vorhergehenden Ansprüche, **dadurch gekennzeichnet, dass** Rollkörper (3; 4; 7; 8) mit einer Abrollfläche (9) mit einem Reibungskoeffizienten im Bereich von 0,2 bis 0,5 eingesetzt werden.

**11.** Verfahren nach Anspruch 10, **dadurch gekennzeichnet, dass** die Abrollfläche (9) Asbest, Asbestersatzstoffe oder SiC enthält.

**12.** Vorrichtung zur Herstellung eines zylinderförmigen Glaskörpers, insbesondere eines Quarzglaskörpers, in einem Vertikalziehprozess, mit einem ringförmigen Heizelement zum Erhitzen und Erweichen eines Glasrohlings, mit einem Abzug, der einen Rahmen aufweist, an dem eine erste Abzugseinheit mit am Glasstrang abrollenden und um dessen Umfang verteilten Rollkörpern, die von einem Referenz-Rollkörper und mindestens einem Hilfs-Rollkörper gebildet werden, gehalten wird, wobei der Referenz-Rollkörper mit einer Drehzahlregelung zur Einstellung der Ziehgeschwindigkeit verbunden ist, **dadurch gekennzeichnet, dass** eine Einrichtung (13) zur Ermittlung des Drehmoments beim Abrollen des Referenz-Rollkörpers (3) und eine Einrichtung (14) zum Einstellen des Drehmoments bei dem mindestens einen Hilfs-Rollkörper (4; 7; 8) auf ein Soll-Drehmoment vorgesehen sind.

**13.** Vorrichtung nach Anspruch 12, **dadurch gekennzeichnet, dass** der Abzug mindestens eine mehrere Rollkörper (7; 8) umfassende zweite Abzugseinheit (2) aufweist.

**14.** Vorrichtung nach Anspruch 13, **dadurch gekennzeichnet, dass** die zweite Abzugseinheit (2) im Rahmen gehalten wird, und dass die Rollkörper (7; 8) der mindestens einen zweiten Abzugseinheit (2) in Richtung senkrecht zur Längsachse (15) des Glasstrangs (5) bewegbar an dem Rahmen gelagert sind.

**15.** Vorrichtung nach Anspruch 13 oder 14, **dadurch gekennzeichnet, dass** die Rollkörper (7; 8) der zweiten Abzugseinheit (2) mit einer Einrichtung (14) zum Einstellen des Drehmoments verbunden sind.

**16.** Vorrichtung nach einem Ansprüche 12 bis 15, **dadurch gekennzeichnet, dass** eine Anpresskraftregeleinheit (25; 37; 38) vorgesehen ist, mittels der die Rollkörper (3; 4; 7; 8) mit einer einstellbaren Anpresskraft (34) gegen den Glasstrang (5) gedrückt werden.

**17.** Vorrichtung nach Anspruch 16, **dadurch gekennzeichnet, dass** die Anpresskraftregeleinheit (25; 37; 38) ein Dämpfungsglied (21) umfasst.

**18.** Vorrichtung nach einem Ansprüche 12 bis 17, **dadurch gekennzeichnet, dass** eine Schwenkvorrichtung vorgesehen ist, mittels der der Rahmen um einen Kippwinkel zur Vertikalen schwenkbar ist.

**Claims**

**1.** A method for producing a cylindrical glass body, in particular a quartz glass body, in a vertical drawing process, comprising a method step in which a glass blank is supplied to a heating zone, softened therein zonewise and a glass strand is drawn off by means of a draw-off device at a controlled drawing speed from the softened area, said draw-off device comprising a first draw-off unit with rolling bodies rolling on said glass strand and being distributed around the circumference thereof, said rolling bodies being formed by a reference rolling body and at least one auxiliary rolling body, the drawing speed being controlled via the speed of said reference rolling body, **characterized in that** a value for the torque of said reference rolling body (3) is determined which is dependent form the weight of the drawn-off glass strand (5), and that the determined value is used as a setpoint torque for setting the torque in said at least one auxiliary rolling body (4; 7; 8) by considering the outer diameter thereof.

**2.** The method according to claim 1, **characterized in that** said torque in said at least one auxiliary rolling body (4; 7; 8) is set to said setpoint torque.

**3.** The method according to claim 1 or 2, **characterized in that** a draw-off device is used which comprises at least one second draw-off unit (2) including a plurality of rolling bodies (7; 8).

**4.** The method according to claim 3, **characterized in that** said rolling bodies (7; 8) of said at least one second draw-off unit (2) are movable in a direction perpendicular to the longitudinal axis (15) of said glass strand (5).

**5.** The method according to claim 3 or 4, **characterized in that** said rolling bodies of said at least one second draw-off unit are used as auxiliary rolling bodies (7; 8), the setpoint torque thereof being set with reference to the torque of said reference rolling body (3).

6. The method according to any one of the preceding claims, **characterized in that** said rolling bodies (3; 4; 7; 8) are pressed with an adjustable contact pressure force (34) against said glass strand (5).

7. The method according to claim 6, **characterized in that** said contact pressure force (34) is set in dependence upon the weight of the drawn-off glass strand (5).

8. The method according to claim 3 and any one of claims 6 or 7, **characterized in that**, when a predetermined maximum contact pressure force is exceeded in said rolling bodies (3; 4) of said first draw-off unit (1), said rolling bodies (7; 8) of said second draw-off unit (2) are additionally brought into engagement with said glass strand (5), or said contact pressure force is increased in rolling bodies of said second draw-off unit that are in engagement with said glass strand.

9. The method according to any one of claims 7 or 8, **characterized in that** the control of said contact pressure force (14) comprises a damping member (21).

10. The method according to any one of the preceding claims, **characterized in that** rolling bodies (3; 4; 7; 8) are used with a roll surface (9) having a coefficient of friction in the range of from 0.2 to 0.5

11. The method according to claim 10, **characterized in that** said roll surface (9) contains asbestos, asbestos substitutes or SiC.

12. An apparatus for producing a cylindrical glass body, in particular a quartz glass body, in a vertical drawing process, comprising an annular heating element for heating and softening a glass blank, comprising a draw-off device including a frame which holds thereon a first draw-off unit with rolling bodies rolling on said glass strand and being distributed around the circumference thereof, said rolling bodies being formed by a reference rolling body and at least one auxiliary rolling body, said reference rolling body being connected to a speed control for setting the drawing speed, **characterized in that** there is provided a means (13) for determining the torque during rolling of said reference rolling body (3), and a means (14) for setting the torque in said at least one auxiliary rolling body (4; 7; 8) to a setpoint torque.

13. The apparatus according to claim 12, **characterized in that** said draw-off device comprises at least one second draw-off unit (2) comprising a plurality of rolling bodies (7; 8).

14. The apparatus according to claim 13, **characterized in that** said second draw-off unit (2) is held in said frame, and that said rolling bodies (7; 8) of said at least one second draw-off unit (2) are movably held on said frame in a direction perpendicular to the longitudinal axis (15) of said glass strand (5).

15. The apparatus according to claim 13 or 14, **characterized in that** said rolling bodies (7; 8) of said second draw-off unit (2) are connected to a means (14) for setting said torque.

16. The apparatus according to any one of claims 12 to 15, **characterized in that** there is provided a contact pressure force control unit (25; 37; 38) by means of which said rolling bodies (3; 4; 7; 8) are pressed with an adjustable contact pressure force (34) against said glass strand (5).

17. The apparatus according to claim 16, **characterized in that** said contact pressure force control unit (25; 37; 38) comprises a damping member (21).

18. The apparatus according to any one of claims 12 to 17, **characterized in that** there is provided a pivot device by means of which said frame is pivotable about a tilt angle relative to the vertical.

**Revendications**

1. Procédé pour la fabrication d'un corps en verre cylindrique, en particulier d'un corps en verre de quartz dans un processus d'étirage vertical, comprenant une étape de procédé, dans laquelle une ébauche de verre est amenée à une zone de chauffage, est ramollie par zone et un écheveau de verre est étiré à partir de la zone ramollie avec une vitesse d'étirage régulée au moyen d'un étirage, écheveau qui présente une première unité d'étirage avec des corps de roulement répartis sur la périphérie de l'écheveau de verre en roulant dessus et qui sont formés par un corps de référence de roulement et au moins par un corps de roulement auxiliaire, la vitesse d'étirage étant régulée par le nombre de tours du corps de roulement de référence, **caractérisé en ce qu'**une valeur est déterminée pour le couple de rotation du corps de roulement de référence (3), qui dépend du poids de l'écheveau de verre (5) et **en ce que** la valeur déterminée est utilisée pour au moins un corps de roulement auxiliaire (4 ; 7 ; 8) en tenant compte de son diamètre externe.

2. Procédé selon la revendication 1, **caractérisé en ce que** le couple de rotation est régulé sur le couple de rotation théorique dans le cas d'au moins un corps de roulement auxiliaire (4; 7; 8).

3. Procédé selon la revendication 1 ou 2, **caractérisé en ce que** qu'un étirage est utilisé qui présente au moins une unité d'étirage (2) comprenant plusieurs corps de roulement (3; 4; 7; 8).

4. Procédé selon la revendication 3, **caractérisé en ce que** les corps de roulement (7; 8) d'au moins une seconde unité d'étirage (2) sont mobiles perpendiculairement à l'axe longitudinal (15) de l'écheveau de verre (5).

5. Procédé selon la revendication 3 ou 4, **caractérisé en ce que** les corps de roulement d'au moins une seconde unité d'étirage sont utilisés en tant que corps de roulement auxiliaire (7 ; 8), dont le couple de rotation théorique du corps de roulement théorique (3) est régulé.

6. Procédé selon l'une des revendications précédentes, **caractérisé en ce que** les corps de roulement (3; 4; 7; 8) sont pressés avec une force de compression (34) contre l'écheveau de verre (5).

7. Procédé selon la revendication 6, **caractérisé en ce que** la force d'application (34) est réglée en fonction du poids de l'écheveau de verre (5).

8. Procédé selon la revendication 3 ou l'une des revendications 6 ou 7, **caractérisé en ce que** lors d'un dépassement d'une forme prédéterminée maximale pur les corps de roulement (3; 4) de la première unité d'étirage (1), en supplément les corps de roulement (7; 8) de la seconde unité d'étirage (2) sont amenés en engagement avec l'écheveau de verre (5) ou bien la force d'application est augmentée dans le cas de corps de roulement de la seconde unité d'étirage qui se trouvent en engagement avec l'écheveau de verre.

9. Procédé selon l'une des revendications précédentes, **caractérisé en ce que** la régulation de la force de pression (14) comprend un organe d'amortissement (21).

10. Procédé selon l'une des revendications précédentes, **caractérisé en ce que** des corps de roulement (3; 4; 7; 8) sont utilisés avec une surface de roulement (9) de coefficient de friction compris entre 0,2 et 0,5.

11. Procédé selon la revendication 10, **caractérisé en ce que** la surface de roulement (9) comprend de l'amiante, des substances équivalentes ou du SiC.

12. Dispositif de fabrication d'un corps de verre cylindrique, en particulier d'un corps de verre de quartz dans un procédé d'étirage vertical, avec un élément chauffant annulaire pour chauffer et ramollir une ébauche de verre avec un étirage qui présente un cadre sur lequel est maintenue une première unité d'étirage avec des corps de roulement roulant sur l'écheveau de verre et répartis sur la périphérie, lesquels sont formés par un corps de roulement de référence et au moins un corps de roulement auxiliaire, le corps de roulement de référence étant relié à un réglage de vitesse de rotation pour le paramétrage de la vitesse d'étirage, **caractérisé en ce qu'**il est prévu un dispositif (13) pour la détermination du couple de rotation lors du roulement du corps de roulement de référence (3) et un dispositif (14) pour le réglage du couple de rotation sur au moins un corps de roulement auxiliaire (4 ; 7 ; 8) sur un couple de rotation théorique.

13. Dispositif selon la revendication 12, **caractérisé en ce que** l'étirage présente au moins une seconde unité d'étirage (2) comprenant plusieurs corps de roulement (7; 8).

14. Dispositif selon la revendication 13, **caractérisé en ce que** la seconde unité d'étirage (2) est maintenue sur le cadre et **en ce que** les corps de roulement (7 ; 8) d'au moins une seconde unité d'étirage (2) sont logés dans la direction perpendiculaire à l'axe longitudinal (15) de l'écheveau de verre (5) de manière mobile sur le cadre.

15. Dispositif selon la revendication 13 ou 14, **caractérisé en ce que** les corps de roulement (7 ; 8) de la seconde unité d'étirage (2) sont reliés à un dispositif (14) pour le réglage du couple de rotation.

16. Dispositif selon l'une des revendications 12 à 15 **caractérisé en ce qu'**il est prévu une unité de réglage de force de pressage (25, 37; 38), au moyen de laquelle les corps de roulement (3; 4; 7; 8) sont pressés par une force d'application réglable (34) contre l'écheveau de verre (5).

17. Dispositif selon la revendication 16, **caractérisé en ce que** l'unité de réglage de force de pression (25; 37; 38) comprend un organe d'amortissement (21).

18. Dispositif selon l'une des revendications 12 à 17 **caractérisé en ce qu'**un dispositif de pivotement est prévu au moyen duquel le cadre est pivotant autour d'un angle de basculement par rapport à la verticale.

**Fig. 1**

**Fig. 2**